# EUROPEAN PATENT APPLICATION

(11) **EP 4 745 011 A1**
(43) Date of publication of application: **20.05.2026**
(21) Application number: 25216245.8
(22) Date of filing: 17.11.2025
(51) Int. Cl.: B62D 25/10, B62D 29/04, B62D 29/00, B60R 21/34

(54) **VEHICLE HOOD**

(30) Priority: 18.11.2024 JP 2024200549
(71) Applicant: Toyota Jidosha Kabushiki Kaisha, Toyota-shi, Aichi-ken 471-8571 (JP)
(72) Inventor: HAMADA, Yukihiro, TOYOTA-SHI, AICHI-KEN, 471-8571 (JP); ISHIZAKA, Hiroomi, TOYOTA-SHI, AICHI-KEN, 471-8571 (JP)
(74) Representative: Cabinet Beau de Loménie

(57) **Abstract**

A vehicle hood (20) for opening and closing a front compartment (12) arranged in a body (10) includes a resin outer panel (30), a support panel (40) having an outline designed to align with a profile line of the outer panel (30) in a plan view, and a frame member (60) formed in a U-letter planar shape which is open toward a vehicle rear region and having an outline designed to align at an edge portion with a profile line of the support panel (40) in the plan view, the frame member (60) including left and right rear end portions which are rotatably attached to the body (10), in which the support panel (40) is mounted on the frame member (60) and includes a U-shaped portion which is overlaid on the frame member (60) and a center portion which is not overlaid on the frame member (60), and the outer panel (30) is overlaid on top of the support panel and fixed thereto.

## Description

### TECHNICAL FIELD

The present disclosure relates to a structure of a vehicle hood for opening and closing a front compartment arranged in the body of a vehicle.

### BACKGROUND

A hood for a motor vehicle has been used, the hood being composed of a resin outer panel, and a metallic frame member positioned so as to align with the periphery of the outer panel (see, for example, JP 2010-13026 A). Here, the frame member is a D-shaped member composed of a rear edge portion extending in a vehicle width direction along a rear edge portion of the outer panel and having a square cross section, a hinge attachment portion mounted on left and right sides of the rear edge portion, a lock attachment portion extending along a front edge portion of the outer panel, and left and right cross members connecting between the hinge attachment portion and the lock attachment portion.

In the hood disclosed in JP 2010-13026 A, because a center portion of the outer panel is not in contact with the frame member, rigidity is decreased in the center portion. For this reason, there may be a case where an amount of absorption of impact energy is reduced in a middle portion of the hood, and an amount of entry of an impactor is accordingly increased. In addition, there is a danger that the center portion of the outer panel could be sagged by its self-weight, or could be floatingly raised during traveling.

Under the circumstances, the present disclosure is directed to improve rigidity of a middle portion of a vehicle hood including a resin outer panel.

### SUMMARY

A vehicle hood according to an aspect of this disclosure is configured to open and close a front compartment arranged in a body, and includes a resin outer panel, a support panel having an outline designed to align with a profile line of the outer panel in a plan view, and a frame member having a U-letter planar shape which is open toward a vehicle rear region and having an outline which is designed to align at an edge portion with a profile line of the support panel in the plan view, the frame member including left and right rear end portions which are configured to be rotatably attached to the body. In the vehicle hood, the support panel is mounted on the frame member and includes a U-shaped portion which is overlaid on the frame member, and a center portion which is not overlaid on the frame member, and the outer panel is overlaid on top of the support panel and attached thereto.

In this way, a U-shaped peripheral portion of the vehicle hood has a three-layer structure composed of the resin outer panel, the support panel, and the frame member, and a middle portion of the vehicle hood has a two-layer structure composed of the outer panel and the support panel. Further, the support panel supports, from below, a center portion of the outer panel being overlaid on the support panel, which can enhance rigidity of the middle portion of the vehicle hood.

In the vehicle hood according to this disclosure, the support panel may include a plurality of protruding strips in the center portion.

In this way, the center portion of the support panel that is not overlaid on the frame member can be improved in rigidity, which can further enhance rigidity of the middle portion of the vehicle hood.

In the vehicle hood according to this disclosure, a crest of the protruding strip, and preferably a crest of each of the protruding strips, may be adhered to the outer panel at a plurality of locations.

This can prevent the resin outer panel from getting lifted and also suppress thermal expansion of the outer panel in a plane direction under a high temperature environment.

In the vehicle hood according to this disclosure, a front portion of the frame member includes a lock mechanism configured to engage the body, a panel front portion of the support panel that is mounted on the front portion of the frame member has an upwardly protruding hat shaped cross section, a top surface of the panel front portion is adhered to the outer panel at a plurality of locations, and an interval between adhesive joints on the panel front portion may be smaller than an interval between adhesive joints on other portions of the support panel, i.e. smaller than an interval between adhesive joints on remaining portions of the support panel other than the panel front portion.

This structure can prevent damage to a front region of the outer panel that could otherwise be caused by opening or closing the vehicle hood.

In the vehicle hood according to this disclosure, the frame member may have a hat-shaped cross section which is open upwardly, and include a web plate, flange plates respectively disposed on both ends on opposite sides of the web plate in an upright position, and an arm plate laterally extending from each of tip ends of the flange plates, and the arm plate may be connected to the support panel, and one of the flange plates may include a bend which is bent between the web plate and the arm plate to project toward the other of the flange plates.

In this way, the flange plate can be folded or buckled at the bend serving as a starting point to thereby absorb impact energy, when an impact load is input to the vehicle hood. As a result, pedestrian protection performance can be improved. Further, an amount of entry of an impactor can be reduced.

In the vehicle hood disclosed herein, the one of the flange plates may be either a flange plate located on a vehicle center side of the frame member in the vehicle width direction or a flange plate located on a vehicle rear side of the frame member in the vehicle longitudinal direction.

In this way, it becomes possible to effectively absorb impact energy when an impact force is input to the middle portion of the vehicle hood.

In the vehicle hood disclosed herein, the frame member may have a hat-shaped cross section which is open upwardly, the U-shaped portion of the support panel may have a hat-shaped cross section which is open downwardly and may be mounted on the frame member so as to cooperatively form a closed cross sectional shape with the frame member, and the support panel may include a cross portion configured to connect between rear regions of left and right panel arm portions of the U-shaped portion in the vehicle width direction.

When the U-shaped portion of the support panel and the frame member cooperate to form the closed cross sectional structure, and the cross portion is installed to connect between the rear regions of the left and right panel arm portions of the U-shaped portion as described above, rigidity of the rear regions of the support panel and thus the entire rigidity of the vehicle hood can be enhanced.

In the vehicle hood disclosed herein, the left and right ends of the cross portion may be placed on a vehicle forward side of the rear end portions of the frame member that are configured to be rotatably attached to the body, at respective positions adjacent to the rear end portions.

In this way, rigidity of the frame member can be enhanced in the vicinity of the rear end portion.

In the vehicle hood disclosed herein, the support panel may include left and right panel rear end portions respectively extending from the rear regions of the left and right panel arm portions of the U-shaped portion toward a vehicle rear region, and include a rear cross portion configured to connect between the left and right panel rear end portions in the vehicle width direction, in which the cross portion may have a channel-shaped cross section which is open upwardly, and the rear cross portion may have a channel-shaped cross section which is open downwardly.

In this way, rigidity of the rear region of the support panel can be increased, and thus the entire rigidity of the vehicle hood can be increased.

In the vehicle hood disclosed herein, a plurality of protruding strips may be arranged in a region surrounded by the U-shaped portion and the cross portion of the support panel.

In this way, the region which is surrounded by the U-shaped portion and the cross portion of the support panel and is not overlaid on the frame member can have enhanced rigidity, which can further improve rigidity of the middle portion of the vehicle hood.

In the vehicle hood disclosed herein, the top surface of the U-shaped portion of the support panel and the crest of the protruding strip, and preferably of each of the protruding strips, may be adhered at a plurality of locations to the outer panel.

This can hamper floatingly raising of the resin outer panel and suppress thermal expansion of the outer panel in a plane direction under high temperature environments.

In the vehicle hood disclosed herein, the frame member may include a web plate, flange plates disposed on both ends on opposite sides of the web plate in an upright position, and an arm plate laterally extending from each of tip ends of the flange plates, in which the arm plate may be connected to the support panel, and one of the flange plates may have a bend which is bent between the web plate and the arm plate to project toward the other of the flange plates.

As a result, when an impact load is input to the vehicle hood, the flange plate can be folded or buckled at the bend serving as a starting point, to thereby absorb impact energy. This can improve pedestrian protection performance. Further, the amount of entry of the impactor can be reduced accordingly.

In the vehicle hood disclosed herein, the cross portion may be an upper cross portion having a hat-shaped cross section which is open downwardly, the frame member may include a front portion, left and right arm portions which are respectively curved from the front portion toward a vehicle rear region and extend toward the vehicle rear region, and a lower cross portion which extends along the vehicle width direction at a position corresponding to the upper cross portion and is configured to connect between the left and right arm portions in the vehicle width direction. In the thus-configured vehicle hood, the lower cross portion may have a hat-shaped cross section which is open upwardly, and the upper cross portion may be mounted on the lower cross portion to cooperatively form the closed cross sectional shape with the lower cross portion.

Because the closed cross sectional structure is formed by the upper cross portion and the lower cross portion as described above, rigidity of the rear region of the support panel can be enhanced, and the entire rigidity of the vehicle hood can be enhanced accordingly.

In the vehicle hood disclosed herein, a plurality of protruding strips may be arranged in a region surrounded by the U-shaped portion and the upper cross portion of the support panel.

In this way, rigidity can be improved in the region that is surrounded by the U-shaped portion and the upper cross portion of the support panel and is not overlaid on the frame member, which can ensure that rigidity of the middle portion of the vehicle hood is further improved.

According to the present disclosure, the middle portion of the vehicle hood including the resin outer panel can be improved in rigidity.

### BRIEF DESCRIPTION OF DRAWINGS

Embodiments of the present disclosure will be described based on the following figures, wherein:
FIG. 1 is a side view showing a vehicle equipped with a vehicle hood according to an embodiment;
FIG. 2 is a plan view showing the vehicle hood according to the embodiment;
FIG. 3 is a plan view showing an outer panel of the vehicle hood according to the embodiment;
FIG. 4 is a plan view showing a support panel of the vehicle hood according to the embodiment;
FIG. 5 is a bottom view showing a frame member of the vehicle hood according to the embodiment along with hinges;
FIG. 6 is a cross-sectional view showing an A-A cross section of the vehicle hood according to the embodiment, indicated in FIG. 2;
FIG. 7 is a cross-sectional view showing a B-B cross section of the vehicle hood according to the embodiment, indicated in FIG. 2;
FIG. 8 is a cross-sectional view showing a C-C cross section of the vehicle hood according to the embodiment, indicated in FIG. 2;
FIG. 9 is a cross-sectional view showing an F-F cross section of the vehicle hood according to the embodiment, indicated in FIG. 2;
FIG. 10 is a cross-sectional view showing a D-D cross section of the vehicle hood according to the embodiment, indicated in FIG. 2;
FIG. 11 is a cross-sectional view showing an E-E cross section of the vehicle hood according to the embodiment, indicated in FIG. 2;
FIG. 12 is a plan view showing a vehicle hood according to another embodiment;
FIG. 13 is a plan view showing a support panel of the vehicle hood according to the other embodiment;
FIG. 14 is a bottom view showing a frame member of the vehicle hood according to the other embodiment along with hinges; and
FIG. 15 is a cross-sectional view showing a G-G cross section of the vehicle hood according to the other embodiment, indicated in FIG. 12.

### DESCRIPTION OF EMBODIMENTS

Hereinafter, a vehicle hood 20 according to an embodiment will be explained with reference to the drawings. In the drawings, reference letters FR, UP, and RH denote the front side, upper side, and right side of a vehicle 100, respectively. Directions opposite to the FR, UP, and RH denote the rear side, lower side, and left side, respectively. Hereinafter, directions explained simply with the terms front and rear or longitudinal, left and right or lateral, and upper and lower or vertical denote the directions with respect to the vehicle 100 unless otherwise specified. In addition, the front, rear, left, right, upper, and lower sides of the vehicle hood 20 correspond to the front, rear, left, right, upper, and lower sides of the vehicle 100, respectively.

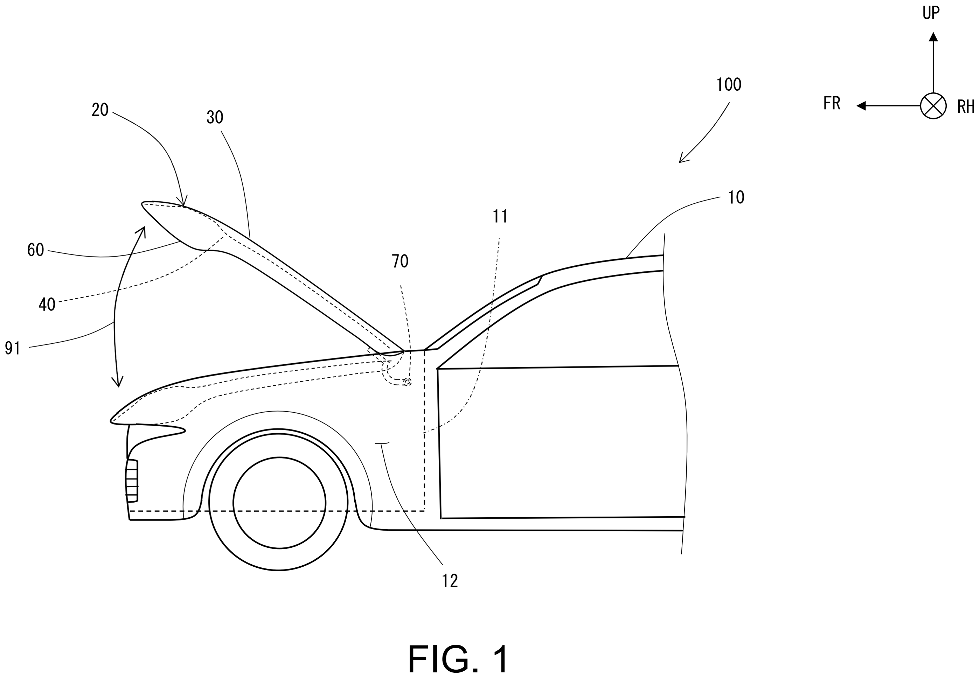

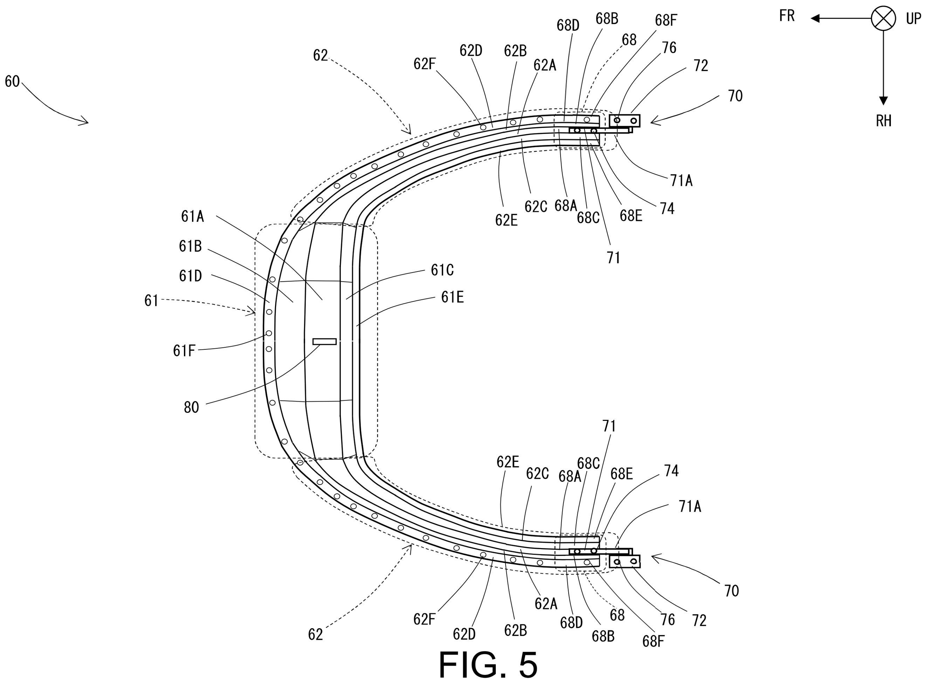

FIG. 1 shows a vehicle 100 with a vehicle hood 20. As shown in FIG. 1, the vehicle 100 has a body 10. The body 10 includes a front compartment 12 located forward of a dash panel 11. The front compartment 12 is a space for housing, for example, a drive unit including an engine and a motor, high voltage devices, such as an inverter, and other devices. The vehicle hood 20 is formed by overlaying a resin outer panel 30, a support panel 40, and a frame member 60. In the vehicle hood 20, rear end portions 68 (see FIGs. 5, 10 and 11) are rotatably attached to the body 10 via hinges 70, and are configured to open and close the front compartment 12 as indicated by an arrow 91 in FIG. 1.

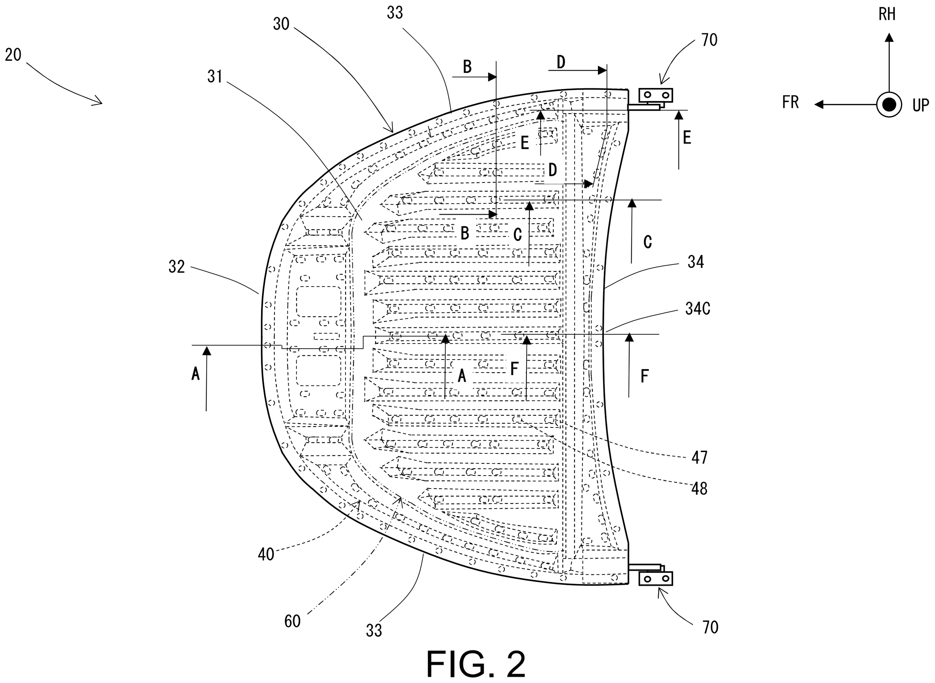

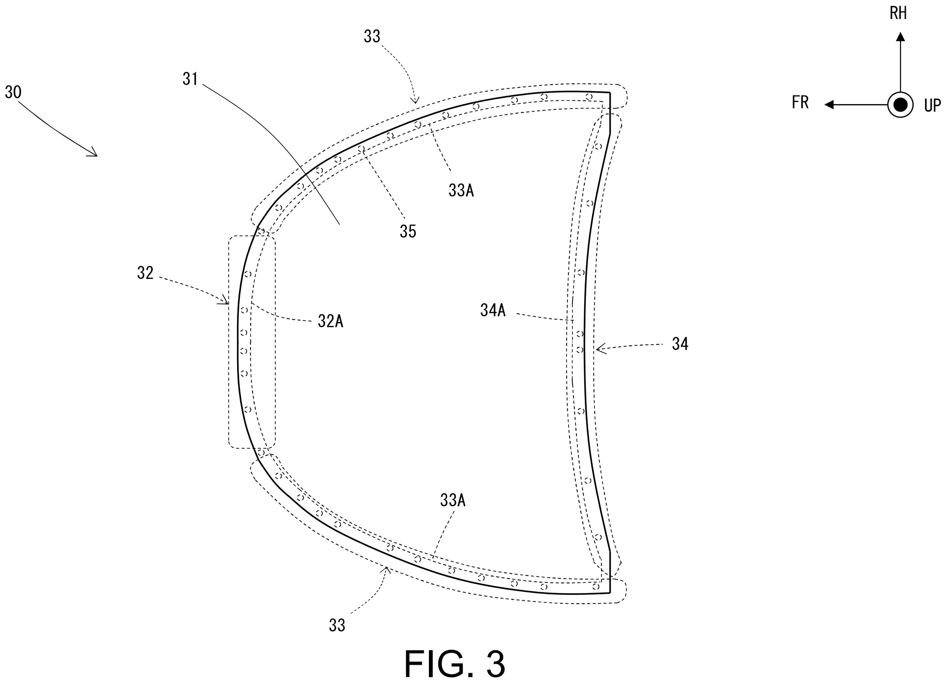

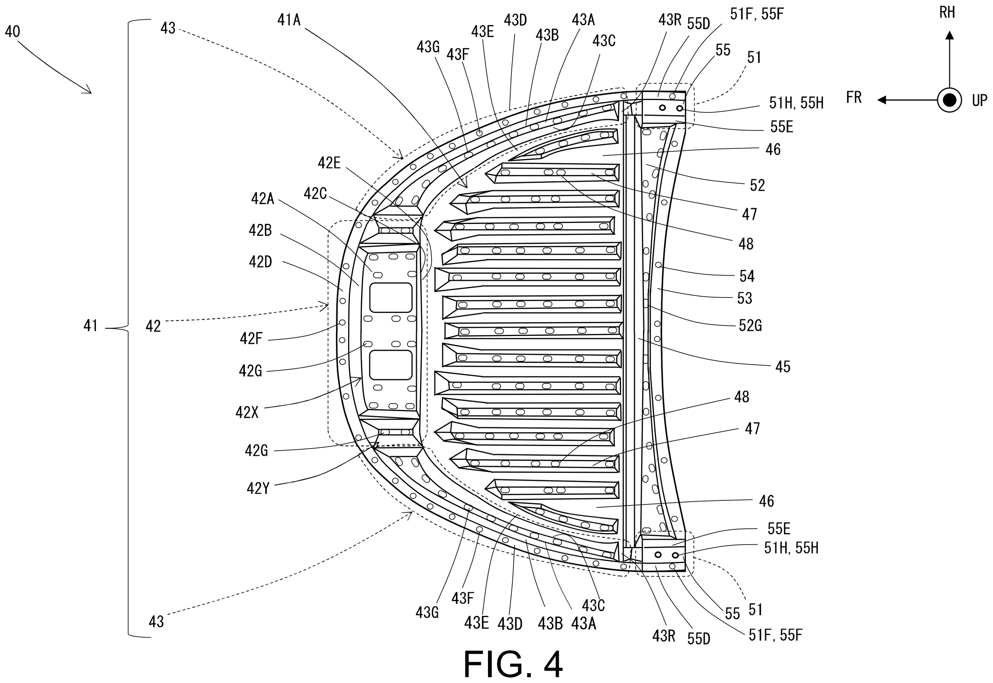

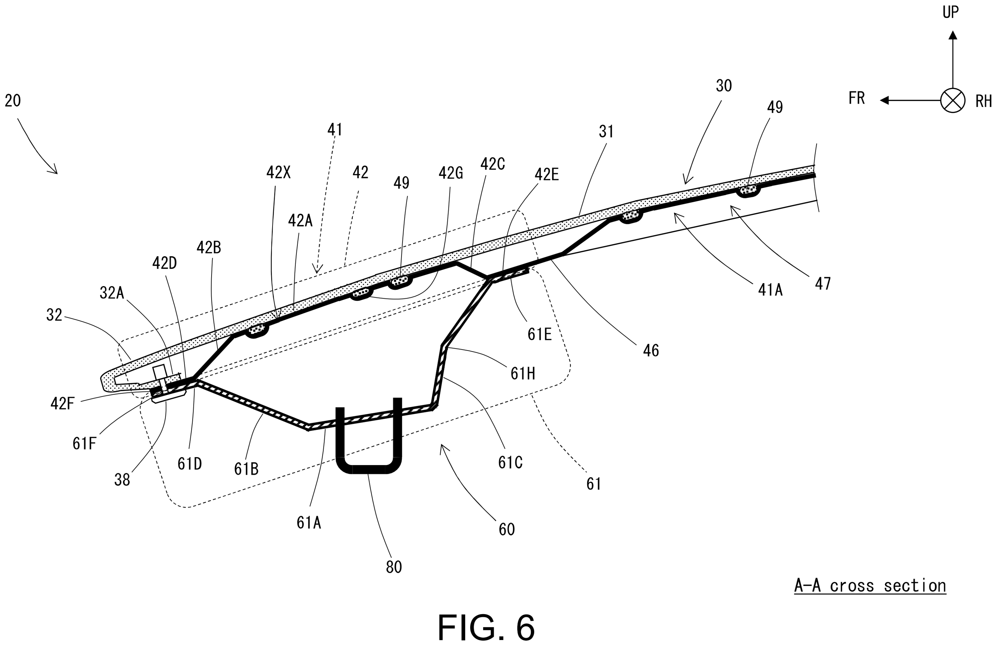

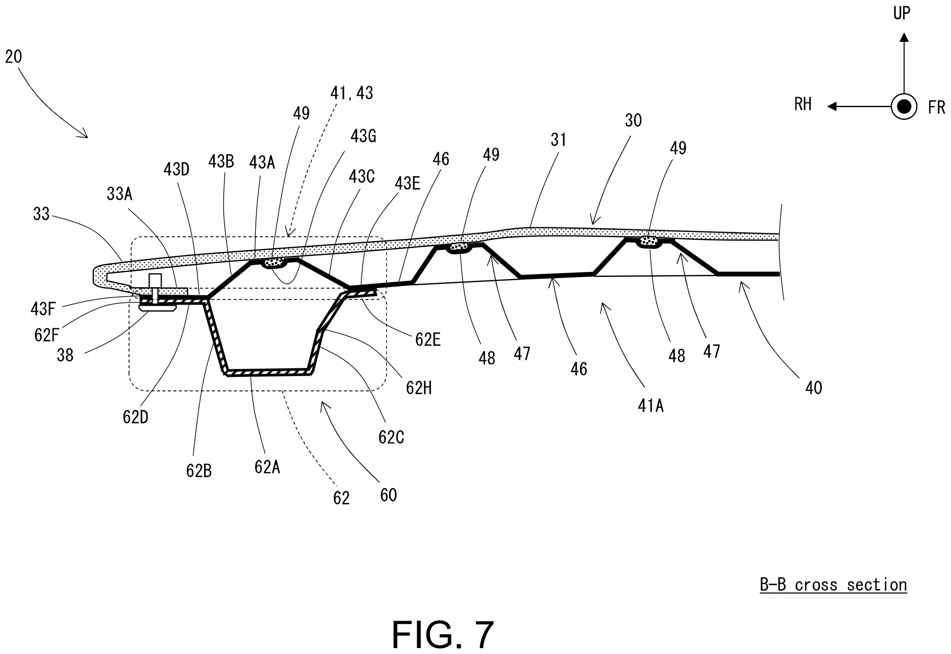

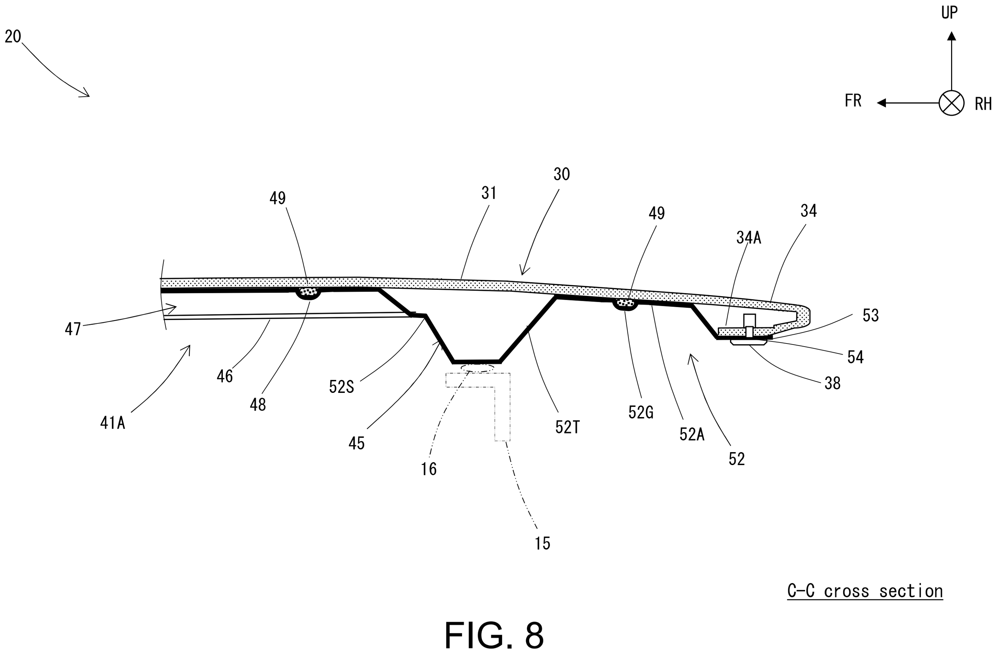

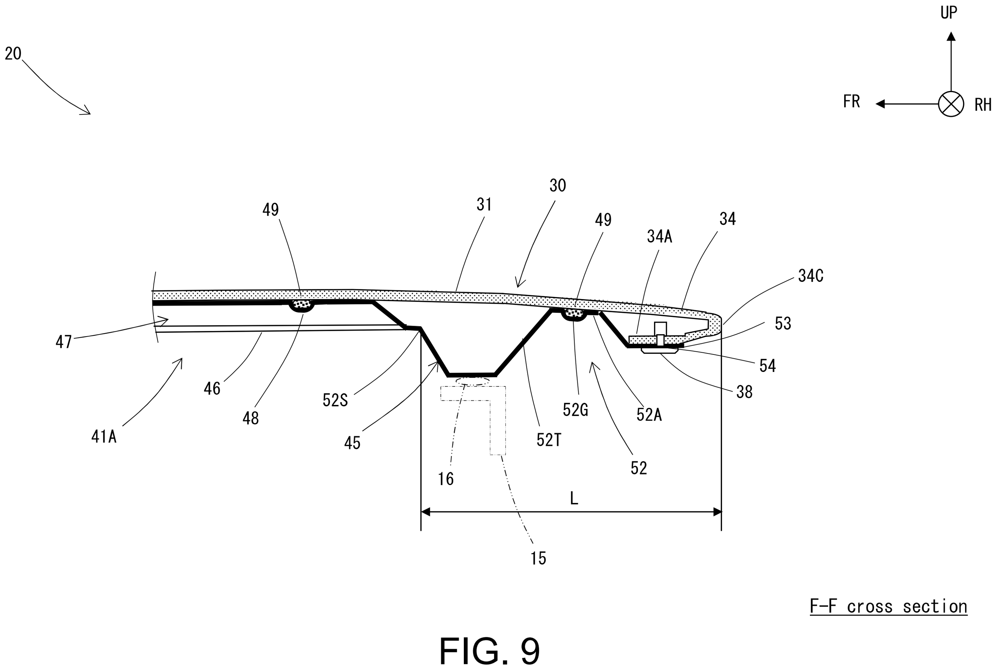

The vehicle hood 20 is formed by stacking, in an overlaid position, the resin outer panel 30 shown in FIGs. 2 and 3, the support panel 40 having a planar shape shown in FIGs. 2 and 4 that is similar to the outer panel 30, and the frame member 60 having a U-letter planar shape shown in FIGs. 2 and 5. As shown in FIGs. 4 and 6 to 9, the support panel 40 includes a U-shaped portion 41 which is overlaid on the frame member 60 and a center portion 41A which is not overlaid on the frame member 60. Therefore, a U-shaped peripheral portion of the vehicle hood 20 has a three-layer structure consisting of the outer panel 30, the support panel 40, and the frame member 60 as shown in FIGs. 6 and 7, and a middle portion of the vehicle hood 20 has a two-layer structure consisting of the outer panel 30 and the support panel 40 as shown in FIGs. 8 and 9. Further, as shown in FIGs. 2, 4, and 6 to 9, the center portion 41A of the support panel 40 has a plurality of protruding strips 47 which protrude upwardly. Both the top surface of the U-shaped portion 41 and the crests of the protruding strips 47 of the support panel 40 are adhered to the bottom surface of the outer panel 30 and configured to support the outer panel 30 from below.
Hereinafter, a detailed structure of each portion is explained.

The outer panel 30 includes, as shown in FIGs. 2 and 3, a front edge portion 32, left and right side edge portions 33, a rear edge portion 34, and a panel main body 31. The front edge portion 32 extends along the vehicle width direction in a forward region. The left and right side edge portions 33 are curved from left and right ends of the front edge portion 32 toward a vehicle rear region and extend toward the vehicle rear region. The rear edge portion 34 connects rear ends of the left and right side edge portions 33 to each other in the vehicle width direction. The panel main body 31 is enclosed by the front edge portion 32, the left and right side edge portions 33, and the rear edge portion 34. Each of outer edges of the front edge portion 32, the left and right side edge portions 33, and the rear edge portion 34 defines a profile line of the outside shape of the outer panel 30.

As shown in FIGs. 3 and 6, the front edge portion 32 includes a front lower flange 32A which is downwardly folded back from the front end of the panel main body 31 so as to extend rearward. Similarly, as shown in FIGs. 3 and 7, the right side edge portion 33 includes a side lower flange 33A which is downwardly folded back from the right end of the panel main body 31 so as to extend leftward. As shown in FIG. 3, the left side edge portion 33 also includes a side lower flange 33A. Similarly, as shown in FIGs. 3, 8, and 9, the rear edge portion 34 includes a rear lower flange 34A which is downwardly folded back from the rear end of the panel main body 31 so as to extend forward. As shown in FIG. 3, the front lower flange 32A, the left and right side lower flange 33A, the rear lower flange 34A are perforated with clip holes 35.

The support panel 40 has, as shown in FIGs. 2 and 4, an outline conforming to the profile line of the outer panel 30 in a plan view. The support panel 40 is a folded-plate member composed of a metal. The support panel 40 may be composed of an aluminum alloy or formed of a steel plate or other metallic members. In addition, the support panel 40 may be manufactured by steel metal pressing or casting.

As shown in FIG. 4, the support panel 40 consists of the U-shaped portion 41, the center portion 41A, and panel rear end portions 51. The U-shaped portion 41 is a region overlaid to rest on the frame member 60 which will be explained below, and includes a panel front portion 42 and left and right panel arm portions 43. On the other hand, the center portion 41A is a region not overlaid to rest on the frame member 60, and includes a cross portion 45, a flat plate portion 46, the protruding strips 47, and a rear cross portion 52. The panel rear end portions 51 respectively extend from rear regions 43R of the left and right panel arm portions 43 toward the vehicle rear region. A reinforcing member 55 is attached to each of the panel rear end portions 51.

The panel front portion 42 is, as shown in FIG. 4, composed of a main body 42X and left and right ends 42Y. The main body 42X has a hat-shaped cross section which is open downwardly, and constitutes an elongated region extending in the vehicle width direction.

FIG. 6 is a cross-sectional view showing the main body 42X of the panel front portion 42. As shown in FIG. 6, the main body 42X includes a web plate 42A, a front flange plate 42B, a rear flange plate 42C, a front arm plate 42D, and a rear arm plate 42E, and has a hat-shaped cross section which is open downwardly. The top surface of the web plate 42A constitutes a support surface for supporting a front portion of the panel main body 31 of the outer panel 30. The front flange plate 42B extends obliquely forward and downward from the front end of the web plate 42A. The front arm plate 42D forwardly extends from the lower end of the front flange plate 42B. The rear flange plate 42C extends obliquely rearward and downward from the rear end of the web plate 42A. The rear arm plate 42E rearwardly extends from the lower end of the rear flange plate 42C. Here, the front end and the rear end of the web plate 42A constitute both ends on opposite sides of the web plate 42A.

The outer edge of the front arm plate 42D has an outline designed to align with the profile line of the front edge portion 32 of the outer panel 30 in the plan view. The front arm plate 42D constitutes an edge portion of a front region of the support panel 40. The front arm plate 42D is perforated with a plurality of clip holes 42F. The rear arm plate 42E is joined to the flat plate portion 46. A plurality of depressions 42G are formed on the top surface of the web plate 42A. In consideration of a situation where the panel front portion 42 is often touched by a person to open or close the vehicle hood 20, an interval between the depressions 42G in the panel front portion 42 is defined to be smaller than intervals between below-described depressions 43G, 52G, and 48 in other portions of the support panel 40. The interval between the depressions 42G may be defined to be smaller than 75 mm, for example.

The left and right ends 42Y have a hat-shaped cross section similar to the shape of the main body 42X shown in FIG. 6. The ends 42Y are identical in structure to the main body 42X, other than a length of the end 42Y in the vehicle width direction smaller than the length of the main body portion X.

The left and right panel arm portions 43 are curved, as shown in FIGs. 4 and 7, from the left and right ends 42Y of the panel front portion 42 toward the vehicle rear region and extend toward the vehicle rear region. The left and right panel arm portions 43 have a hat-shaped cross section which is open downwardly, as in the case of the panel front portion 42.

As shown in FIGs. 4 and 7, the right panel arm portion 43 is composed of a web plate 43A, a right outer flange plate 43B, a right inner flange plate 43C, a right outer arm plate 43D, and a right inner arm plate 43E, and has a hat-shaped cross section which is open downwardly. The top surface of the web plate 43A constitutes a support surface for supporting a right side end region of the panel main body 31 of the outer panel 30. The right outer flange plate 43B extends obliquely rightward and downward from the right end of the web plate 43A. The right outer arm plate 43D extends rightward from the lower end of the right outer flange plate 43B. The right inner flange plate 43C extends obliquely leftward and downward from the left end of the web plate 43A. The right inner arm plate 43E extends leftward from the lower end of the right inner flange plate 43C. Here, the right end and the left end of the web plate 43A constitute both ends on opposite sides of the web plate 43A.

The outer edge of the right outer arm plate 43D has, as shown in FIGs. 2 and 4, an outline designed to align with the profile line of the right side edge portion 33 of the outer panel 30 in the plan view. The right outer arm plate 43D constitutes a right side edge portion of the support panel 40. The right outer arm plate 43D is perforated with a plurality of clip holes 43F. The right inner arm plate 43E is connected to a right side of the flat plate portion 46. A plurality of depressions 43G are formed on the top surface of the web plate 43A. The interval between the depressions 43G is defined to be greater than the interval between the above-described depressions 42G on the panel front portion 42. The interval between the depressions 43G may be approximately 150 mm to 200 mm, for example.

Similarly, as shown in FIG. 4, the left panel arm portion 43 is composed of the web plate 43A, a left outer flange plate 43B, a left inner flange plate 43C, a left outer arm plate 43D, and a left inner arm plate 43E, and has a hat shaped cross section which is open downwardly. As shown in FIGs. 2 and 4, the left outer arm plate 43D has an outline designed to align with the profile line of the left side edge portion 33 of the outer panel 30 in the plan view. The left outer arm plate 43D constitutes a left side edge portion of the support panel 40. Further, the left inner arm plate 43E is connected to a left side of the flat plate portion 46.

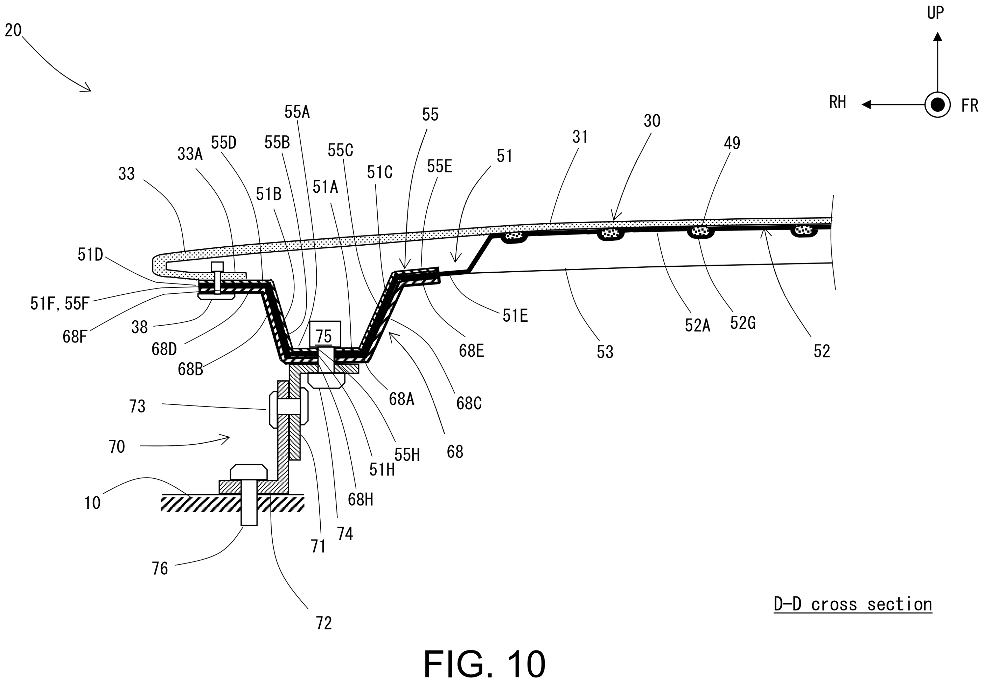

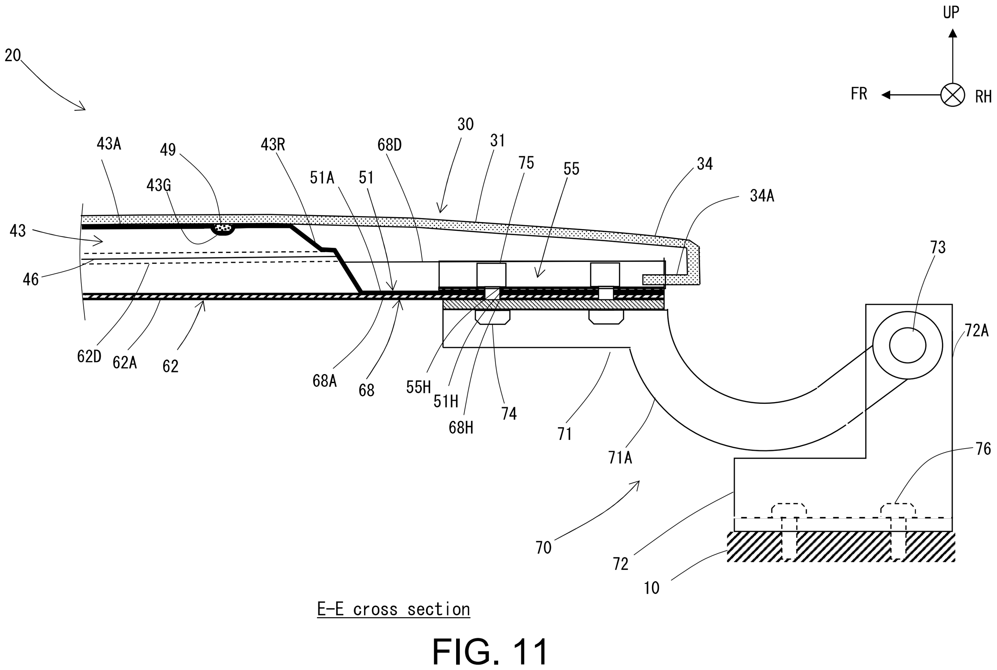

The left and right panel rear end portions 51 respectively extend, as shown in FIGs. 4 and 11, from the rear regions 43R of the left and right panel arm portions 43 toward the vehicle rear region. As shown in FIG. 10, the right panel rear end portion 51 is composed of a web plate 51A, a right outer flange plate 51B, a right inner flange plate 51C, a right outer arm plate 51D, and a right inner arm plate 51E, and has a hat-shaped cross section which is open upwardly. As shown in FIGs. 10 and 11, the web plate 51A has bolt holes 51H. In addition, the outer arm plate 51D has a clip hole 51F. As shown in FIGs. 2 and 4, the outer edge of the right outer arm plate 51D has an outline designed to align with the profile line of the rear region of the right side edge portion 33 of the outer panel 30 in the plan view. The right outer arm plate 51D constitutes a rear region of the right side edge portion of the support panel 40.

Similarly, the left panel rear end portion 51 has the hat-shaped cross section which is open upwardly and includes the web plate 51A, a left outer arm plate 51D, and a left inner arm plate 51E. As shown in FIGs. 2 and 4, the outer edge of the left outer arm plate 51D has an outline designed to align with the profile line of the rear region of the left side edge portion 33 of the outer panel 30 in the plan view. The left outer arm plate 51D constitutes a rear region of the left side edge portion of the support panel 40.

As shown in FIGs. 4, 10, and 11, the right reinforcement member 55 is, similarly to the right panel rear end portion 51, composed of a web plate 55A, a right outer flange plate 55B, a right inner flange plate 55C, a right outer arm plate 55D, and a right inner arm plate 55E, and has the hat-shaped cross section which is open upwardly. The reinforcement member 55 is overlayed on the panel rear end portion 51 and joined thereto. As in the case of the right outer arm plate 51D of the panel rear end portion 51, the web plate 55A of the reinforcement member 55 has bolt holes 55H. Further, the right outer arm plate 55D is perforated with a plurality of clip holes 55F. The left reinforcement member 55 and the right reinforcement member 55 are laterally symmetrical in shape and have the same structure.

The cross portion 45 is configured, as shown in FIGs. 4, 8, and 9, to connect between the left and right rear regions 43R of the left and right panel arm portions 43 in the vehicle width direction, and has a channel-shaped cross section which is open upwardly. Further, as shown in FIG. 4, the left and right ends of the cross portion 45 are placed so as to be adjacent to the panel rear end portions 51 on a vehicle forward side thereof. The panel rear end portion 51 is overlaid on the rear end portion 68 of the frame member 60. Therefore, the left and right ends of the cross portion 45 are placed adjacent to the rear end portions 68 of the frame member 60 on the vehicle forward side thereof. A front end edge 52S of the cross portion 45 extending along the vehicle width direction is joined to the flat plate portion 46. In addition, a rear end edge 52T of the cross portion 45 is joined to the rear cross portion 52.

As shown in FIGs. 2 and 9, the cross portion 45 is positioned in such a manner that a distance L between the front end edge 52S and a rear end edge 34C of the outer panel 30 at the center in the vehicle width direction is in a predetermined range. The predetermined range may be defined as appropriate, and the distance L may be 150 mm or less, for example. In this way, as shown in FIGs. 8 and 9, the position of the cross portion 45 matches the position of a cowl louver 15 mounted on the body 10, which can allow a bottom surface of the cross portion 45 to seal via a seal material 16 a space between the cowl louver 15 and the cross portion 45.

The rear cross portion 52 is, as shown in FIGs. 4, 8, and 9, configured to connect between the left and right panel rear end portions 51 in the vehicle width direction on the vehicle rear side of the cross portion 45. As shown in FIG. 8, the rear cross portion 52 has a hat-shaped cross section with an arm plate on one side, in which a rear arm plate 53 extends rearward from a lower end of a rear flange plate in a channel-shaped cross section which is open downwardly. The top surface of the web plate 52A in the rear cross portion 52 serves as the support surface for supporting a rear region of the panel main body 31 of the outer panel 30. A plurality of depressions 52G are formed on the top surface of the web plate 52A. The interval between the depressions 52G is defined in a manner similar to the above-described interval between the depressions 43G in the panel parm 43. The interval between the depressions 52G may be approximately 150 ~ 200 mm, for example. As shown in FIGs. 2 and 4, the outer edge of the rear arm plate 53 has an outline designed to align, in the plan view, with the profile line of the rear edge portion 34 of the outer panel 34. The rear arm plate 53 constitutes the edge portion in the rear region of the support panel 40. In addition, the rear arm plate 53 is perforated with a plurality of clip holes 54.

The flat plate portion 46 is, as shown in FIGs. 4 and 6 to 9, a flat plate member arranged in a region surrounded by the panel front portion 42, the left and right panel arm portions 43, and the cross portion 45. As shown in FIGs. 4 and 6 to 9, a front region, left and right side regions, and a rear region of the flat plate portion 46 are respectively connected to the rear arm plate 42E of the panel front portion 42, the inner arm plates 43E of the left and right panel arm portions 43, and the front end edge 52S of the cross portion 45.

The protruding strip 47 has, as shown in FIGs. 4 and 6 to 9, the channel-shaped cross section protruding upward from the flat plate portion 46, and extends along the vehicle longitudinal direction. The flat plate portion 46 includes the plurality of protruding strips 47. The crests of the protruding strips 47 are configured to support the panel main body 31 of the outer panel 30 from below. An interval between the protruding strips 47 in the vehicle width direction may be arbitrarily specified, and may be specified to an interval of 80 ~ 100 mm, for example. In addition, the protruding strips 47 may be arranged in parallel to each other. Further, a plurality of depressions 48 are formed on the top surface of each of the protruding strips 47. An interval between the depressions 48 is specified in a manner similar to the previously described interval between the depressions 43G in the panel arm portion 43. The interval between the depressions 48 may be approximately 150 ~ 200 mm, for example.

The frame member 60 is, as shown in FIG. 5, formed in a U-letter plane shape which is open toward the vehicle rear region, and has an outline such that an edge portion of the frame member 60 is aligned with the profile line of the support panel 40 in the plan view. As shown in FIG. 5, the frame member 60 is a folded plate member formed of a metal, and has a front portion 61 and left and right arm portions 62. The frame member 60 may be composed of an aluminum alloy or formed of a steel sheet or other metallic member. In addition, the frame member 60 may be manufactured by steel metal pressing or casting.

The front portion 61 has, as shown in FIGs. 5 and 6, a hat-shaped cross section which is open upwardly, and is an elongated member extending along the vehicle width direction. As shown in FIG. 6, the front portion 61 is composed of a web plate 61A, a front flange plate 61B, a rear flange plate 61C, a front arm plate 61D, and a rear arm plate 61E, and has a hat-shaped cross section which is open upwardly. The web plate 61A has a striker 80 configured to engage a hook (not illustrated in the drawings) mounted on the body 10. The striker 80 constitutes a part of a lock mechanism for engaging the vehicle hood 20 with the body 10 when the front compartment is closed by the vehicle hood 20.

The front flange plate 61B extends obliquely forward and upward from the front end of the web plate 61A. The front arm plate 61D extends forward from the upper end of the front flange plate 61B. The rear flange plate 61C extends obliquely rearward and upward from the rear end of the web plate 61A. The rear arm plate 61E extends rearward from the upper end of the rear flange plate 61C. The rear flange plate 61C has a bend 61H which is bent to protrude toward the front flange plate 61B. Here, the rear flange plate 61C is located on a vehicle rear side of the front portion 61 in the vehicle longitudinal direction. In addition, the front end and the rear end of the web plate 61A constitute both ends on opposite sides of the web plate 61A.

The outer edge of the front arm plate 61D has an outline designed to align with both the profile line of the outer edge of the front arm plate 42D in the support panel 40 and the profile line of the front edge portion 32 of the outer panel 30 in the plan view. The front arm plate 61D and the rear arm plate 61E are respectively placed in positions to be overlaid on the front arm plate 42D and the rear arm plate 42E in the panel front portion 42 of the support panel 40. The front arm plate 61D constitutes an edge portion in a front region of the frame member 60. The front arm plate 61D is perforated with a plurality of clip holes 61F.

As shown in FIGs. 5 and 7, the left and right arm portions 62 are curved toward the vehicle rear region from left and right ends of the front portion 61 and extend toward the vehicle rear region. The left and right arm portions 62 have an upwardly open hat-shaped cross section as in the case of the front portion 61.

As shown in FIGs. 5 and 7, the right arm portion 62 is composed of a web plate 62A, a right outer flange plate 62B, a right inner flange plate 62C, a right outer arm plate 62D, and a right inner arm plate 62E, and has an upwardly open hat-shaped cross section. The right outer flange plate 62B extends obliquely rightward and upward from the right end of the web plate 62A. The right outer arm plate 62D extends rightward from the upper end of the right outer flange plate 62B. The right inner flange plate 62C extends obliquely leftward and upward from the left end of the web plate 62A. The right inner arm plate 62E extends leftward from the upper end of the right inner flange plate 62C. The inner flange plate 62C has a bend 62H which is bent to protrude toward the outer flange plate 62B. Here, the inner flange plate 62C is located on a vehicle center side of the arm portion 62 in the vehicle width direction. In addition, the right end and the left end of the web plate 62A constitute both ends on opposite sides of the web plate 62A.

The outer edge of the right outer arm plate 62D has, as shown in FIGs. 2 and 5, an outline designed to align with both the profile line of the outer edge of the right outer arm plate 43D in the support panel 40 and the profile line of the right side edge portion 33 of the outer panel 30 in the plan view. The right outer arm plate 62D and the right inner arm plate 63E are respectively located at positions to be overlaid on the right outer arm plate 43D and the right inner arm plate 43E of the support panel 40. The right outer arm plate 62D constitutes a right side edge portion of the frame member 60. The right outer arm plate 62D is perforated with a plurality of clip holes 62F.

Similarly, as shown in FIG. 5, the left arm portion 62 is also composed of the web plate 62A, the left outer flange plate 62B, the left inner flange plate 62C, the left outer arm plate 62D, and the left inner arm plate 62E, and has the upwardly open hat-shaped cross section. The left inner flange plate 62C has the bend 62H. As shown in FIGs. 2 and 5, the left outer arm plate 62D has an outline designed to align with the profile line of the outer edge of the left outer arm plate 43D in the support panel 40 and the profile line of the left side edge portion 33 of the outer panel 30 in the plan view. The left outer arm plate 62D and the left inner arm plate 62E are respectively located at positions to be overlaid on the left outer arm plate 43D and the left inner arm plate 43E of the support panel 40. The left outer arm plate 62D constitutes a left side edge portion of the frame member 60.

As shown in FIG. 5, left and right hinges 70 are attached to the rear end portions 68 of the left and right arm portions 62. As shown in FIG. 10, similarly to the main part of the right arm portion 62 having been explained with reference to FIG. 7, the right rear end portion 68 is composed of a web plate 68A, a right outer flange plate 68B, a right inner flange plate 68C, a right outer arm plate 68D, and a right inner arm plate 68E, and has the upwardly open hat-shaped cross section. As shown in FIGs. 10 and 11, the web plate 68A has a bolt hole 68H. As shown in FIG. 5, the outer arm plate 68D has a clip hole 68F. The right panel rear end portion 51 of the support panel 40 and the reinforcement member 55 are overlaid on the right rear end portion 68 and joined thereto. The rear end portion 68 of the left arm portion 62 is symmetric to the right rear end portion 68.

The hinge 70 as shown in FIGs. 10 and 11 includes a hood-side member 71 which is fixed to the rear end portion 68 of the flame member 60, and the panel rear end portion 51 and the reinforcement member 55 of the support panel 40 by a bolt 74 and a nut 75, and also includes a body-side member 72 which is fixed to the body 10 by a bolt 76. The hood-side member 71 includes a base portion fixed to the rear end portion 68 and a curved arm plate 71A which is curved so as to protrude downward from the base portion and extends toward the vehicle rear region. Meanwhile, the body-side member 72 includes a base portion fixed to the body 10 and a bracket 72A extending upward from the base portion. The curved arm plate 71A is rotatably connected to the bracket 72A so as to be rotatable about a pin 73.

As has been explained above, the outer edge of the front arm plate 42D in the panel front portion 42 of the support panel 40 has an outline designed to align with the profile line of the front edge portion 32 of the outer panel 30 in the plan view. Further, the outer edges of the outer arm plates 43D of the left and right panel arm portions 43 and the outer edges of the outer arm plates 51D of the left and right panel rear end portions 51 have outlines designed to align with the profile lines of the left and right side edge portions 33 of the outer panel 30 in the plan view. Moreover, the outer edge of the rear arm plate 53 in the rear cross portion 52 has an outline designed to align with the profile line of the rear edge portion 34 of the outer panel 30 in the plan view. Therefore, the outline of the support panel 40 is formed in the shape conforming to the profile line of the outer panel 30 in the plan view.

In addition, the outer edge of the front arm plate 61D in the front portion 61 of the frame member 60 has an outline designed to align with both the profile line of the outer edge of the front arm plate 42D in the support panel 40 and the profile line of the front edge portion 32 of the outer panel 30 in the plan view. Further, the outer edges of the outer arm plates 62D in the left and right arm portions 62 have outlines designed to align, in the plan view, with the profile lines of the outer edges of the left and right outer arm plates 43D in the support panel 40 and the profile lines of the outer edges of the outer arm plates 51D in the left and right panel rear end portions 51 and the profile lines of the left and right side edge portions 33 of the outer panel 30. Therefore, the outside shape of the frame member 60 is formed in such a manner that the edge portion conforms to the profile line of the support panel 40 and the profile line of the outer panel 30 in the plan view.

Hereinafter, a combination of the outer panel 30, the support panel 40, the frame member 60, and the hinge 70 will be explained.

The support panel 40 is mounted on the frame member 60. As shown in FIG. 6, the front arm plate 42D and the rear arm plate 42E in the panel front portion 42 of the support panel 40 are respectively overlaid on the front arm plate 61D and the rear arm plate 61E in the front portion 61 of the frame member 60 and attached thereto. The front arm plate 42D in the support panel 40 is fixed to the front arm plate 61D in the frame member 60, and the rear arm plate 42E in the support panel 40 is fixed to the rear arm plate 61E in the frame member 60, by spot welding, for example. Further, as shown in FIG. 7, the left and right outer arm plates 43D and the left and right inner arm plates 43E in the left and right panel arm portions 43 of the support panel 40 are respectively overlaid on the left and right outer arm plates 62D and the left and right inner arm plates 62E in the left and right arm portions 62 of the frame member, and attached thereto. The outer arm plate 43D in the support panel 40 is fixed to the outer arm plate 62D in the frame member 60, and the inner arm plate 43E in the support panel 40 is fixed to the inner arm plate 62E in the frame member 60, by spot welding, for example. In this way, a closed cross sectional shape is formed by the front portion 61 of the frame member 60 and the panel front portion 42 of the support panel 40, and by the left/right arm portion 62 of the frame member 60 and the left/right panel arm portion 43 of the support panel 40. Accordingly, the panel front portion 42 and the left and right panel arm portions 43 of the support panel 40 are mounted in overlaid position on the frame member 60 having the U-letter shape, to thereby constitute the U-shaped portion 41.

Still further, as shown in FIGs. 10 and 11, the panel rear end portion 51 of the support panel 40 is overlaid on the rear end portion 68 of the frame member 60 and attached thereto. The reinforcement member 55 is overlaid on the panel rear end portion 51 of the support panel 40. The rear end portion 68 of the frame member 60, the panel rear end portion 51 of the support panel 40, and the reinforcement member 55 are fixed together by spot welding or the like.

When the support panel 40 is attached to the top of the frame member 60 as described above, the clip holes 42F and 43F, which are respectively formed in the front arm plate 42D and the outer arm plate 43D of the support panel 40, are located directly above the clip holes 61F and 62F, which are respectively formed in the front arm plate 61D and the outer arm plate 62 of the frame member 60, to form through holes. In addition, the clip holes 55F, 51F, and 68F respectively formed in the outer arm plate 55D of the reinforcement member 55, the outer arm plate 51D in the panel rear end portion 51 of the support panel 40, and the outer arm plate 68D in the rear end portion 68 of the frame member 60 are located at overlaying positions, to thereby form through holes.

The outer panel 30 is overlaid on the support panel 40 and attached thereto. As shown in FIGs. 6 to 9, the front edge portion 32, the left and right side edge portions 33, and the rear edge portion 34 of the outer panel 30 are respectively mounted on the front arm plate 42D of the support panel 40, the left and right outer arm plates 43 of the support panel 40, the left and right outer arm plates 55D of the reinforcement members 50, and the rear arm plate 53 of the support panel 40.

As shown in FIG. 6, the front lower flange 32A in the front edge portion 32 is overlaid on the front arm plate 42D of the support panel 40, and fixed to both the front arm plate 42D of the support panel 40 and the front arm plate 61D of the frame member 60 by the clip 38. Meanwhile, as shown in FIG. 7, the side lower flange 33A of the right side edge portion 33 is overlaid on the right outer arm plate 43D of the support panel 40 and fixed to both the right outer arm plate 43D of the support panel 40 and the right outer arm plate 62D of the frame member 60 by the clip 38. Similarly, the side lower flange 33A of the left side edge portion 33 is fixed to both the left outer arm plate 43D and the left outer arm plate 62D by the clip 38. As shown in FIG. 8, the rear lower flange 34A of the rear edge portion 34 is overlaid on the rear arm plate 53 of the support panel 40 and fixed to the rear arm plate 53 by the clip 38. As shown in FIG. 10, a rear region of the side lower flange 33A of the side edge portion 33 is overlaid on the outer arm plate 55A of the reinforcement member 55 and fixed, by the clip 38, to the outer arm plate 55D of the reinforcement member 55, the outer arm plate 51D in the panel rear end portion 51 of the support panel 40, and the outer arm plate 68D in the rear end portion 68 of the frame member 60. It should be noted that the clip 38 is merely an example of a fastening member, and the plates may be fixed by a bolt or any other fastener.

As described above, when the edge portions of the outer panel 30 are fixed to the edge portions of the support panel 40, as shown in FIGs. 2 and 6 to 9, the bottom surface of the panel main body 31 in the outer panel 30 is brought into contact with the top surface of the U-shaped portion 41 of the support panel 40, the top surface of the web plate 52A in the rear cross portion 52, and the crests of the plurality of protruding strips 47. In this way, the panel main body 31 is supported from below by the top surface of the U-shaped portion 41 of the support panel 40, the top surface of the rear cross portion 52, and the crests of the protruding strips 47.

As shown in FIG. 4, the top surfaces of the web plates 42A, 43A, and 52A respectively include the plurality of depressions 42G, 43G, and 52G. Further, each of the crests of the protruding strips 47 has the plurality of depressions 48. As shown in FIGs. 6 to 9, the depressions 42G, 43G, 52G, and 48 are provided with adhesive agents 49. This allows the panel main body 31 to be adhered and fixed at a plurality of locations to the top surface of the U-shaped portion 41, the top surface of the rear cross portion 52, and the crests of the protruding strips 48. The adhesive agent 49 having been cured constitutes an adhesive joint between the outer panel 30 and the support panel 40. Various types of adhesives may be used for the adhesive agent 49, and a hot melt adhesive having a releasable property, for example, may be used. Alternatively, mastic adhesives may be used for the adhesive agent 49.

As shown in FIGs. 10 and 11, when the panel rear end portion 51 of the support panel 40 is overlaid on the rear end portion 68 of the frame member 60, and the reinforcement member 55 is further overlaid on the panel rear end portion 51 of the support panel 40, the bolt holes 55H, 51H, and 68H respectively formed in the web plate 55A of the reinforcement member 55, the web plate 51A in the panel rear end portion 51 of the support panel 40, and the web plate 68A in the rear end portion 68 of the frame member 60 are aligned to form bolt through holes. Bolts 74 are inserted through the bolt through holes and screwed in nuts 75 to fix a base portion of the hood-side member 71 of the hinge 70 to the bottom surface of the web plate 68A of the frame member 60. Then, the body-side member 72 of the hinge 70 is fixed to the body 10 by the bolt 76. As a result, the vehicle hood 20 is rotatably mounted on the body 10 in such a manner that the vehicle hood 20 is able to rotate about the pin 73 of the hinge 70 to open and close the front compartment 12.

As has been explained above, the vehicle hood 20 has the three-layer structure in the U-shaped peripheral portion including the resin outer panel 30, the support panel 40, and the frame member 60, and has the two-layer structure in the middle portion including the outer panel 30 and the support panel 40. Then, the middle portion of the outer panel 30 is supported by the center portion 41A of the support panel 40. This can enhance rigidity of the middle portion of the vehicle hood 20. Meanwhile, the plurality of protruding strips 47 having the channel shaped cross section protruding upward from the flat plate portion 46 can function to improve rigidity of the center portion 41A of the support panel 40, the center portion 41A not resting on the frame member 60. In this way, rigidity of the middle portion of the vehicle hood 20 can be improved.

Further, in the vehicle hood 20, the panel main body 31 is adhered and fixed at a plurality of locations to the top surface of the U-shaped portion 41, the top surface of the rear cross portion 52, and the crests of the protruding strips 47. This can prevent the outer panel 30 from being floatingly raised and suppress thermal expansion of the outer panel 30 in its plain direction under high temperature environments.

Because the rear flange plate 61C and the inner flange plate 62C in the frame member 60 have the bends 61H and 62H, when an impact load is input to the vehicle hood 20, the rear flange plate 61C or the inner flange plate 62C can be bent or curved at the bend 61H or 62H serving as a starting point of bending or curving, to thereby absorb impact energy. In this way, pedestrian protection performance can be improved. Further, the amount of entry of the impactor can be reduced. It should be noted that the bends 61H and 62H are respectively bent to protrude toward the front flange plate 61B and the outer flange plate 62B in the above explanation, although the bends 61H and 62H are not limited to the explained form, and may be respectively bent to protrude in the direction opposite to corresponding one of the front flange plate 61B and the outer flange plate 62B.

Further, it has been explained that in the vehicle hood 20, the rear flange plate 61C and the inner flange plate 62 of the frame member 60 have the bends 61H and 62H, which is not a limitation. For example, it may be configured such that the front flange plate 61B and the outer flange plate 62B of the frame member 60 respectively include bends. Alternatively, a bend may be provided to each of the front flange plate 61B, the rear flange plate 61C, the outer flange plate 62B, and the inner flange plate 62C of the frame member 60.

The U-shaped portion 41 of the support panel 40 having the downwardly open hat-shaped cross section is overlaid on the frame member 60 having the upwardly open hat-shaped cross section, to thereby form the closed cross sectional shape. This can increase strength of the U-shaped peripheral portion of the vehicle hood 20. Because the striker 80 is installed in the front portion 61 of the frame member 60 which cooperates with the panel front portion 42 of the support panel 40 to form the closed cross sectional structure, the strength of engagement with the lock mechanism installed in the body 10 can be increased, which can, in turn, effectively prevent the vehicle hood 20 from being floatingly raised during traveling.

Because the interval between the depressions 42G formed in the top surface of the panel front portion 42 of the support panel 40 is defined to be smaller than the intervals between depressions 43G, 52G, and 48 formed in the other portions of the support panel 40, an interval of joints between the panel front portion 42 and the outer panel 30 can be smaller than an interval of joints between the outer panel 30 and any of the other portions of the support panel 40. This can enhance joining strength of the joint between the panel front portion 42 and the outer panel 30. As a result, this structure can prevent damage to the front portion of the outer panel 30 which could otherwise be caused by opening and closing the vehicle hood 20.

The vehicle hood 20 includes both the rear cross portion 52 for connecting between the left and right panel rear end portions 51 of the support panel 40, and the cross portion 45 disposed forward of the rear cross portion 52 to connect between the rear regions 43R of the left and right panel arm portions 43 of the support panel 40 in the vehicle width direction. This can increase the rigidity of the rear region of the support panel 40 and can, in turn, improve the entire rigidity of the vehicle hood 20. In addition, the left and right ends of the cross portion 45 are located at positions adjacent to the rear end portions 68 of the frame member 60 on its vehicle forward side. In this way, rigidity can be further increased in the vicinity of the rear end portion 68 of the frame member 60 where the hinge 70 is mounted.

In addition, the cross portion 45 is positioned in such a manner that the distance L between the front end edge 52S and the rear end edge 34C of the outer panel 30 at the center of the vehicle width direction is in the predetermined range, for example, 150 mm or less, which can effectively suppress out-of-plane deformation of the rear region of the vehicle hood 20.

Moreover, the front edge portion 32 of the outer panel 30 is fixed by the clip 38 to an overlaid combination of the front arm plate 42D of the support panel 40 and the front arm plate 61D of the frame member 60, and the left and right side edge portions 33 of the outer panel 30 are fixed by the clips 38 to an overlaid combination of the outer arm plate 43D of the support panel 40 and the outer arm plate 62D of the frame member 60. As such, the edge portions of the outer panel 30 are fastened using the clips 38 to the overlaid edge portions of the support panel 40 and the frame member 60 together. In this way, fixation strength of the edge portions of the outer panel 30 can be increased, which can, in turn, effectively prevent a situation in which the edge portion of the outer panel 30 is drifted.

In the above description, it has been explained that the support panel 40 of the vehicle hood 20 includes the cross portion 45, although the support panel 40 may be configured to not include the cross portion 45. For example, the frame member 60 may be formed in a D-letter shape with a cross member which has a rectangular cross section and is configured to connect between rear regions of the left and right arm portions 62 of the frame member 60 in the vehicle width direction, for supporting the rear region of the support panel 40 from below.

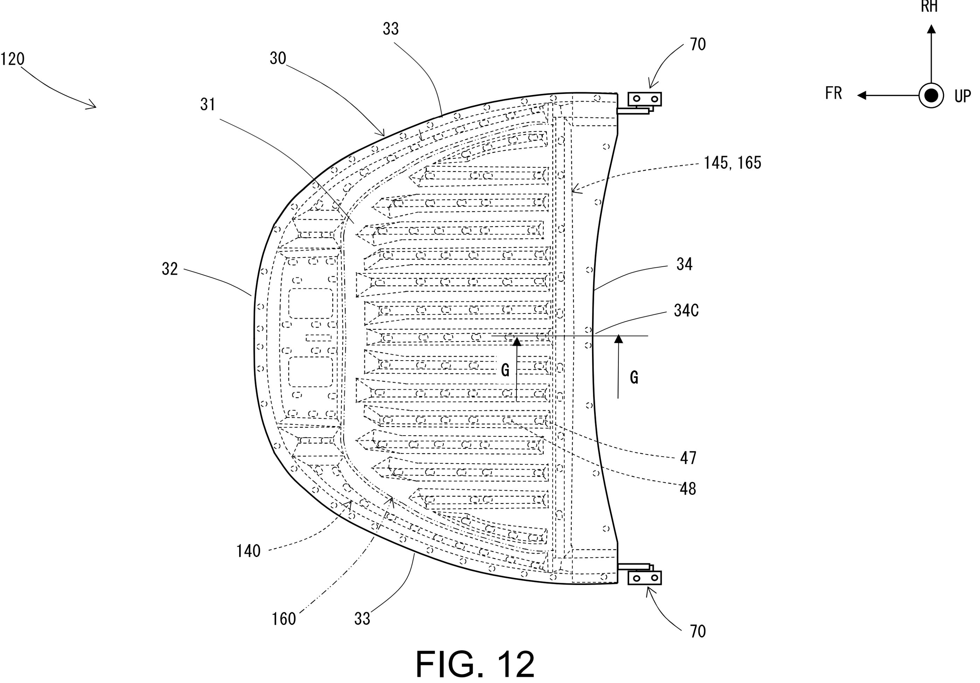

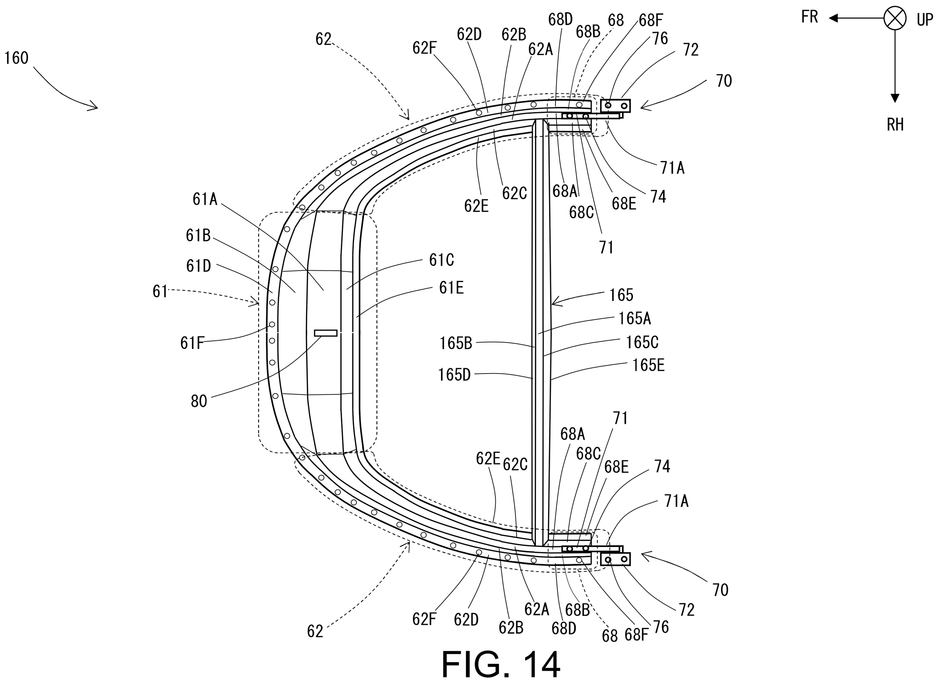

Next, a vehicle hood 120 according to another embodiment will be explained with reference to FIGs. 12 to 15. In the vehicle hood 120, a support panel 140 includes an upper cross portion 145 in place of the cross portion 45 and the rear cross portion 52, and a frame member 160 includes a lower cross portion 165. Other than the cross portions, configurations and components of the vehicle hood 120 are identical to those of the vehicle hood 20 which is previously explained with reference to FIGs. 1 to 11. Portions of the vehicle hood 120 identical to those of the vehicle hood 20 are identified by identical reference numerals, and description related to those portions will not be repeated.

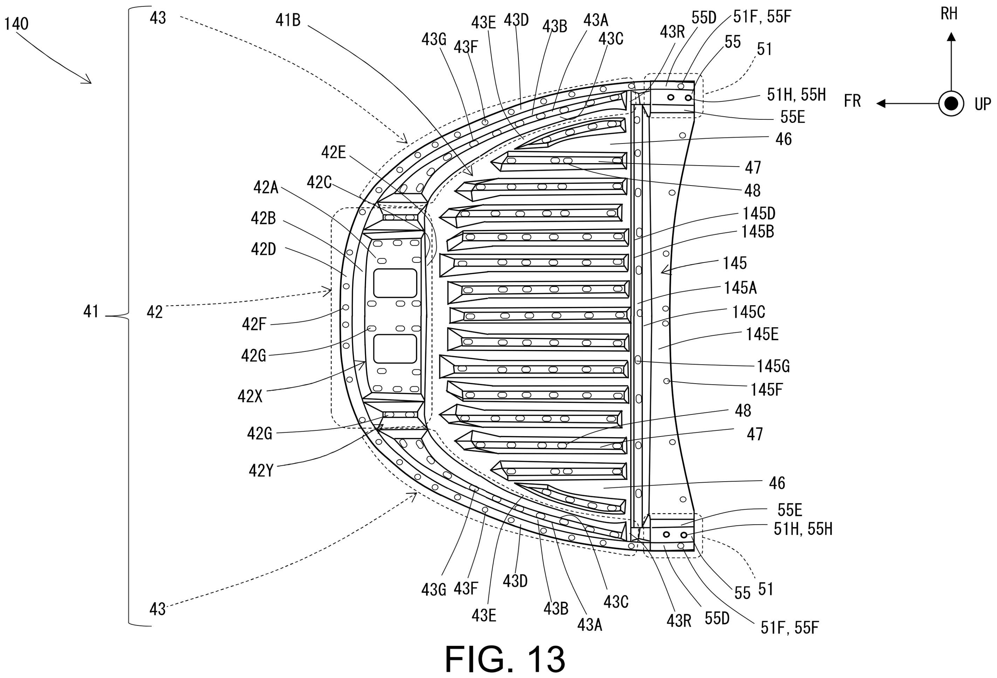

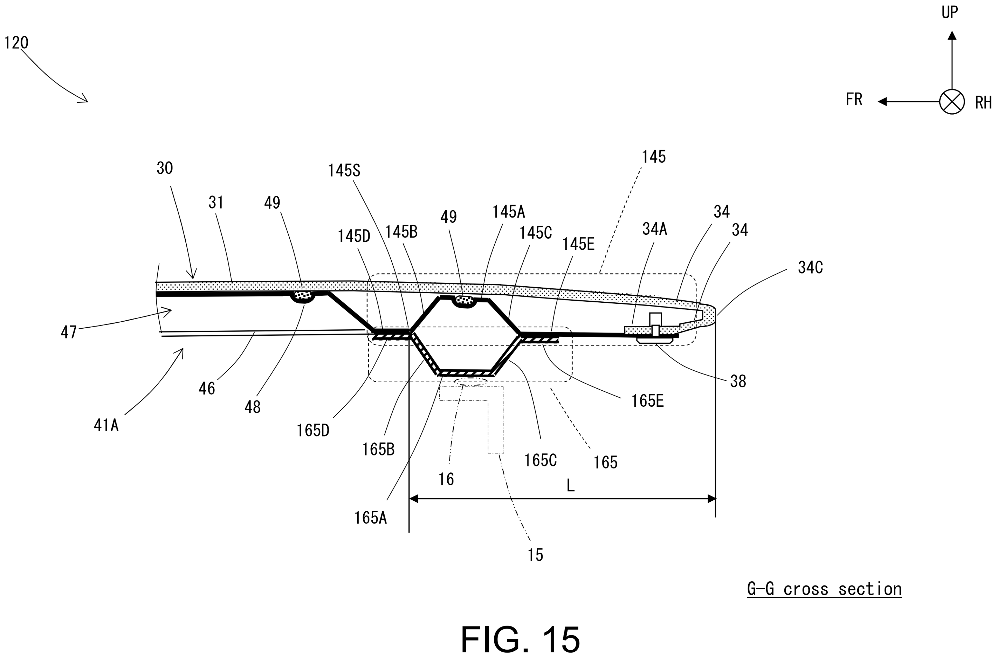

As shown in FIGs. 13 and 15, the upper cross portion 145 of the support panel 140 is configured to connect left and right rear regions 43R of the left and right panel arm portions 43 in the vehicle width direction, as in the case of the cross portion 45 of the previously explained support panel 40. The upper cross portion 145 has a hat-shaped cross section which is open downwardly. Further, left and right ends of the upper cross portion 145 are placed at positions adjacent to the rear end portions 68 of the frame member 60 on their vehicle forward side.

The upper cross portion 145 includes a web plate 145A, a front flange plate 145B, a rear flange plate 145C, a front arm plate 145D, and a rear arm plate 145E. The front arm plate 145D is connected to a rear edge of the flat plate portion 46. The rear arm plate 145E has an outside shape designed in such a manner that the rear edge of the rear arm plate 145E is aligned with the profile line of the rear edge portion 34 of the outer panel 30. The rear arm plate 145E constitutes an edge portion in a rear region of the support panel 140. In addition, the rear arm plate 145E is perforated with a plurality of clip holes 145F. Moreover, a plurality of depressions 145G are formed on the top surface of the web plate 145A.

The upper cross portion 145 is placed in such a manner that a distance L between the lower end of the front flange plate 145B and the rear end edge 34C of the outer panel at the center of the vehicle width direction is in a predetermined range. The predetermined range may be arbitrarily specified, and the distance L may be 150 mm or less, for example. In this way, as shown in FIG. 15, a position of the web plate 165A in the lower cross portion 165 can match a position of the cowl louver 15 mounted on the bod 10, to seal a space between the bottom surface of the web plate 165A and the cowl louver 15 via the seal material 16.

The frame member 160 includes the lower cross portion 165 having the hat-shaped cross section which is open upwardly. The lower cross portion 165 is placed so as to correspond to the upper cross portion 145 at a position adjacent to the rear end portion 68 of the frame member 60 on its vehicle forward side, and extends in the vehicle width direction to connect between the left and right arm portions 62 of the frame member 160 in the vehicle width direction. The lower cross portion 165 is composed of a web plate 165A, a front flange plate 165B, a rear flange plate 165C, a front arm plate 165D, and a rear arm plate 165E. The front arm plate 165D and the rear arm plate 165E are placed so as to be overlaid on the front arm plate 145D and the rear arm plate 145E of the support panel 140, respectively.

When the support panel 140 is mounted on the frame member 160, the front arm plate 145D and the rear arm plate 145E of the support panel 140 are respectively overlaid on the front arm plate 165D and the rear arm plate 165E of the frame member 160. The front arm plate 145D and the rear arm plate 145E are respectively attached to the front arm plate 165D and the rear arm plate 165E by spot welding, for example. In this way, a closed cross sectional structure is formed by the upper cross portion 145 and the lower cross portion 165.

As described above, the frame member 160 has the D-letter shape formed by the front portion 61, the left and right arm portions 62, and the lower cross portion 165, and the U-shaped portion 41 and the upper cross portion 145 of the support panel 140 are overlaid on the frame member 160 and attached thereto. Therefore, a region surrounded by the U-shaped portion 41 and the upper cross portion 145 of the support panel 140 constitutes a center portion 41B which does not rest on the frame member 160.

The rear lower flange 34A in the rear edge portion 34 of the outer panel 30 is fixed to the rear arm plate 145E by the clip 38. In addition, the rear region of the panel main body 31 of the outer panel 30 is supported by the top surface of the web plate 145A of the upper cross portion 145.

As shown in FIG. 15, depressions 145G on the top surface of the web plate 145A are filled with the adhesive agents 49. In this way, the rear region of the panel main body 31 is adhered and fixed at a plurality of locations to the top surface of the upper cross portion 145.

In the thus-configured vehicle hood 120, the central portion 41B of the support panel 140 supports the middle portion of the outer panel 30, as in the case of the previously explained vehicle hood 20. This can enhance rigidity of the middle portion of the vehicle hood 120. Because the plurality of protruding strips 47 are formed on the center portion 41B of the support panel 140 which is not overlaid on the frame member 160, rigidity of the center portion 41B of the support panel 140 can be enhanced. This can ensure that the rigidity of the middle portion of the vehicle hood 120 is further enhanced.

In addition, because the closed cross sectional structure is formed by the upper cross portion 145 and the lower cross portion 165, rigidity of the rear region of the vehicle hood 120 can be increased.

In the above description, it has been explained that in the vehicle hood 120, the support panel 140 includes the upper cross portion 145, the frame member 160 includes the lower cross portion 165, and the upper cross portion 145 and the lower cross portion 165 form the closed cross sectional structure, although the support panel 140 may be configured to not include the upper cross portion 145. For example, in place of the lower cross portion 165 of the frame member 160, a cross member having a rectangular closed cross section may be used to connect between the rear regions of the left and right arm portions 62 in the vehicle width direction, to support the rear region of the support panel 140 from below.

## Claims

1. A vehicle hood (20, 120) for opening and closing a front compartment (12) arranged in a body (10), comprising:
a resin outer panel (30);
a support panel (40, 140) having an outline designed to align with a profile line of the outer panel (30) in a plan view; and
a frame member (60, 160) formed in a U-letter planar shape which is open toward a vehicle rear region, and having an outline which is designed to align at an edge portion with a profile line of the support panel (40, 140) in the plan view, the frame member (60, 160) including left and right rear end portions (68) which are configured to be rotatably attached to the body (10); wherein
the support panel (40, 140) is mounted on the frame member (60, 160) and includes a U-shaped portion (41) which is overlaid on the frame member (60, 160) and a center portion (41A, 41B) which is not overlaid on the frame member (60, 160); and
the outer panel (30) is mounted on top of the support panel (40, 140) and attached thereto.

2. The vehicle hood (20, 120) according to claim 1, wherein
the support panel (40, 140) comprises a plurality of protruding strips in the center portion (41A, 41B).

3. The vehicle hood (20, 120) according to claim 2, wherein
a crest of each of the protruding strips (47) is adhered to the outer panel (30) at a plurality of locations.

4. The vehicle hood (20, 120) according to claim 3, wherein
a front portion (61) of the frame member (60, 160) comprises a lock mechanism (80) configured to engage the body (10);
a panel front portion (42) of the support panel (40, 140) that is mounted on the front portion (61) of the frame member (60, 160) has an upwardly protruding hat-shaped cross section, wherein a top surface of the panel front portion (42) is adhered to the outer panel (30) at a plurality of locations; and
an interval between adhesive joints (49) on the panel front portion (42) is smaller than an interval between adhesive joints (49) on remaining portions of the support panel (40, 140) other than the panel front portion (42).

5. The vehicle hood (20, 120) according to any one of claims 1 to 4, wherein
the frame member (60, 160) has a hat-shaped cross section which is open upwardly, and comprises a web plate (61A, 62A), flange plates (61B, 61C, 62B, 62C) respectively disposed on both ends on opposite sides of the web plate (61A, 62A) in upright position, and an arm plate (61D, 61E, 62D, 62E) laterally extending from each of tip ends of the flange plates (61B, 61C, 62E, 62C);
the arm plate (61D, 61E, 62D, 62E) is connected to the support panel (40, 140);
one of the flange plates (61C, 62C) has a bend (61H, 62H) that is bent between the web plate (61A, 62A) and the arm plate (61E, 62E) to project toward the other of the flange plates (61B, 62B).

6. The vehicle hood (20, 120) according to claim 5, wherein
the one of the flange plates (61C, 62C) is the flange plate (62C) located on a vehicle center side of the frame member (60, 160) in a vehicle width direction or the flange plate (61C) located on a vehicle rear side of the frame member (60, 160) in a vehicle longitudinal direction.

7. The vehicle hood (20, 120) according to claim 1, wherein
the frame member (60, 160) has a hat-shaped cross section which is open upwardly;
the U-shaped portion (41) of the support panel (40, 140) has a hat-shaped cross section which is open downwardly, and is mounted on the frame member (60, 160) so as to cooperatively form a closed cross sectional shape with the frame member (60, 160); and
the support panel (40, 140) comprises a cross portion (45, 145) configured to connect between rear regions (43R) of left and right panel arm portions (43) of the U-shaped portion (41).

8. The vehicle hood (20, 120) according to claim 7, wherein
left and right ends of the cross portion (45, 145) are respectively placed at positions adjacent to the rear end portions (68) of the frame member (60, 160) that are configured to be rotatably attached to the body (10), the positions being on a vehicle forward side of the rear end portions (68).

9. The vehicle hood (20, 120) according to claim 8, wherein
the support panel (40) comprises
left and right panel rear end portions (51) extending from the rear regions (43R) of the left and right panel arm portions (43) of the U-shaped portion (41) toward a vehicle rear region, and
a rear cross portion (52) configured to connect between the left and right panel rear end portions (51) in the vehicle width direction; and
the cross portion (45) has a channel-shaped cross section which is open upwardly, and the rear cross portion (52) has a channel-shaped cross section which is open downwardly.

10. The vehicle hood (20, 120) according to claim 7, wherein
a plurality of protruding strips (47) are arranged in a region (46) surrounded by the U-shaped portion (41) and the cross portion (45, 145) of the support panel (40, 140).

11. The vehicle hood (20, 120) according to claim 10, wherein
a top surface of the U-shaped portion (41) of the support panel (40, 140) and the crest of the protruding strip (47) are adhered to the outer panel (30) at a plurality of locations.

12. The vehicle hood (20, 120) according to any one of claims 7 to 10, wherein
the frame member (60, 160) comprises a web plate (61A, 62A), flange plates (61B, 61C, 62B, 62C) respectively disposed on both ends on opposite sides of the web plate (61A, 62A) in upright position, and an arm plate (61D, 61E, 62D, 62E) laterally extending from each of tip ends of the flange plates (61B, 61C, 62B, 62C);
the arm plate (61D, 61E, 62D, 62E) is connected to the support panel (40, 140);
one of the flange plates (61C, 62C) has a bend (61H, 62H) that is bent between the web plate (61A, 62A) and the arm plate (61E, 62E) to project toward the other of the flange plates (61B, 62B).

13. The vehicle hood (20, 120) according to claim 7, wherein
the cross portion (45, 145) is an upper cross portion (145) having a hat-shaped cross section which is open downwardly;
the frame member (160) comprises a front portion (61), left and right arm portions (62) which are curved from the front portion (61) toward a vehicle rear region and extend toward the vehicle rear region, and a lower cross portion (165) extending along the vehicle width direction at a position corresponding to the upper cross portion (145), the lower cross portion (165) configured to connect between the left and right arm portions (62) in the vehicle width direction;
the lower cross portion (165) has a hat-shaped cross section which is open upwardly; and
the upper cross portion (145) is mounted on the lower cross portion (165) to cooperatively form a closed cross sectional shape with the lower cross portion (165).

14. The vehicle hood (120) according to claim 13, wherein
a plurality of protruding strips (47) are arranged in a region (46) surrounded by the U-shaped portion (41) and the upper cross portion (145) of the support panel (140).

15. The vehicle hood (120) according to claim 14, wherein
a top surface of the U-shaped portion (41) of the support panel (140) and crests of the protruding strips (47) are adhered to the outer panel (30) at a plurality of locations.
